# EUROPEAN PATENT APPLICATION

(11) **EP 4 697 120 A1**
(43) Date of publication of application: **18.02.2026**
(21) Application number: 25187253.7
(22) Date of filing: 03.07.2025
(51) Int. Cl.: G05D 1/60

(54) **SETTING MACHINE SYNC HOMEPOINTS USING EQUIPMENT MODELS**

(30) Priority: 16.08.2024 US 202418806979
(71) Applicant: Deere & Company, Moline, IL 61265 (US)
(72) Inventor: Faust, Jeremy J., Mannheim (DE)
(74) Representative: Holst, Sönke

(57) **Abstract**

Automatically setting homepoints in a machine synchronization system is disclosed. A leader kinematic model of a leader machine is obtained. A follower kinematic model of a follower machine is obtained. A homepoint that enables an alignment of the follower machine to the leader machine is calculated based on the leader kinematic model and the follower kinematic model. The homepoint is then set for the follower machine.

## Description

### TECHNICAL FIELD

This disclosure relates generally to agricultural machinery, and more specifically to setting machine sync homepoints using equipment models.

### BACKGROUND

In agricultural machinery systems, a "homepoint" refers to a designated relative position (e.g., an offset position) of one location (e.g., a point) one machine with respect to another location (e.g., another point) of another machine. A homepoint serves as a reference point for synchronizing the movements of a leader machine (e.g., a combine harvester), with a follower machine (e.g., a tractor towing a grain cart). The homepoint enables the leader machine to coordinate the speed and direction of the follower machine, enabling the follower machine to maintain an optimal position relative to the leader machine during operations, such as unloading grain. By setting a homepoint, the system (e.g., the combination of the leader and follower machines) can automate the alignment and movement of the machines, reducing the need for manual adjustments and improving the efficiency of the harvesting process.

### SUMMARY

Disclosed herein are implementations of setting machine synchronization homepoints using equipment models.

A first aspect of the disclosed implementations is a method for automatically setting homepoints in a machine synchronization system. The method includes obtaining a leader kinematic model of a leader machine; obtaining a follower kinematic model of a follower machine; calculating a homepoint based on the leader kinematic model and the follower kinematic model, where the homepoint enables an alignment of the follower machine to the leader machine; and setting the homepoint for the follower machine.

A second aspect of the disclosed implementations is a system for automatically setting homepoints in a machine synchronization system. The system includes one or more memories and one or more processors. The one or more processors are configured to execute instructions stored in the one or more memories to obtain a leader kinematic model of a leader machine; obtain a follower kinematic model of a follower machine; calculate a homepoint based on the leader kinematic model and the follower kinematic model, where the homepoint enables an alignment of the follower machine to the leader machine; and set the homepoint for the follower machine.

A third aspect of the disclosed implementations is one or more non-transitory computer readable media storing instructions operable to cause one or more processors to perform operations for setting homepoints in a machine synchronization system. The operations include obtaining a leader kinematic model of a leader machine; obtaining a follower kinematic model of a follower machine; calculating a homepoint based on the leader kinematic model and the follower kinematic model, where the homepoint enables an alignment of the follower machine to the leader machine; and setting the homepoint for the follower machine.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of a system for setting a homepoint.
FIG. 2A illustrates an example of using kinematic models to place an auger of a combine into the center of a grain cart attached to a tractor.
FIG. 2B illustrates parameters of a kinematic model of a leader machine.
FIG. 2C illustrates parameters of a kinematic model of the follower-implement combination.
FIG. 2D illustrates an example of attaching multiple implements to a follower machine.
FIG. 3 is a block diagram illustrating setting a homepoint.
FIG. 4 illustrate user interfaces associated with a machine sync software.
FIG. 5 is an example of a computing device.
FIG. 6 is a flowchart of an example of a technique for setting a homepoint.

### DETAILED DESCRIPTION

Conventional systems for setting homepoints require a manual setup process where an operator must physically align a leader machine (or simply leader) and a follower machine (or simply follower) to establish a homepoint. For example, an operator of a tractor (e.g., a follower), to which a grain cart is attached, may position the tractor next to a combine harvester (e.g., a leader) by manually driving the tractor into the correct location, ensuring that the middle of the grain cart is in line with the spout (e.g., the tip) of the harvester's auger. Once positioned, the operator sets the homepoint, such as via a user interface of a software application that is part of or works in conjunction with the follower. One the homepoint is set, this reference point can be used to automatically set (at a subsequent time) and maintain the alignment between the machines as the leader machine is operated.

The manual setup is cumbersome. For example, the homepoint may have to be set every time, such as when a configuration of the leader or follower changes (e.g., a different auger is used). Additionally, the manual set is not scalable, especially for large operations involving multiple agricultural machines, as each unique pair of leader and follower must be manually configured. To illustrate using a real-life example, in a large-scale sugar cane operation, a team of three technicians took approximately 8-10 hours to set 180 homepoints for 5 harvesters and 12 tractors, each of the tractors pulling three carts. This represented only 15% of the total fleet of machines for this particular farming operation, which means that if all of the machines were to be configured, it would have taken significantly longer than 8-10 hours. The process involved pulling each machine next to the other and interacting with the display of a machine sync application multiple times, highlighting the inefficiency and time-consuming nature of the setup. That is, a homepoint is usually set by manually positioning the machines and hitting a button on the machine sync application, which fixes the global positioning system (GPS) coordinates for synchronization. This process is not only time-consuming but also prone to errors, as the initial position often needs to be adjusted repeatedly to achieve accurate synchronization.

As illustrated, the conventional technique of manually setting machine sync homepoints is suboptimal for several reasons. First, it is highly labor-intensive, requiring operators to spend significant time aligning each machine pair and setting the homepoints, which is particularly challenging in large-scale operations. This inefficiency leads to operational delays and increased labor costs. Additionally, the manual setup is prone to inaccuracies, as the default homepoint settings are often incorrect, necessitating further adjustments. These inaccuracies can result in poor synchronization, reducing the effectiveness of the machine syncing and causing frustration for operators who may have to continually make adjustments.

Implementations according to this disclosure solve problems such as these by automatically setting machine sync homepoints based on equipment (i.e., machine and/or implement) models. For example, the machine can be a combine or a tractor; and an implement an implement, such as a grain cart, can be any device or tool that is attached to or towed by a tractor or other agricultural machinery to perform specific tasks in farming operations.

Positional offsets and equipment models are used to accurately determine the synchronization points between leader and follower machines. By utilizing GPS data and equipment-specific parameters (e.g., measurements), homepoints can be automatically configured (e.g., set) without requiring manual intervention. Setting homepoints using equipment models significantly reduces setup time and increases accuracy, making it highly scalable for large operations. For example, the precise position of an unloading auger relative to the follower grain cart can be automatically calculated, ensuring optimal synchronization.

Automatically setting machine sync homepoints using equipment models eliminates the need for repeated manual adjustments, enhancing operational efficiency and accuracy and reducing labor costs. Additionally, operators are enabled to quickly and accurately set up their equipment out of the box, thus improving overall productivity and satisfaction and more efficient farming operations.

To describe some implementations in greater detail, reference is first made to examples of systems, machines, implements, hardware and software structures used to implement a system for setting machine sync homepoints using equipment models.

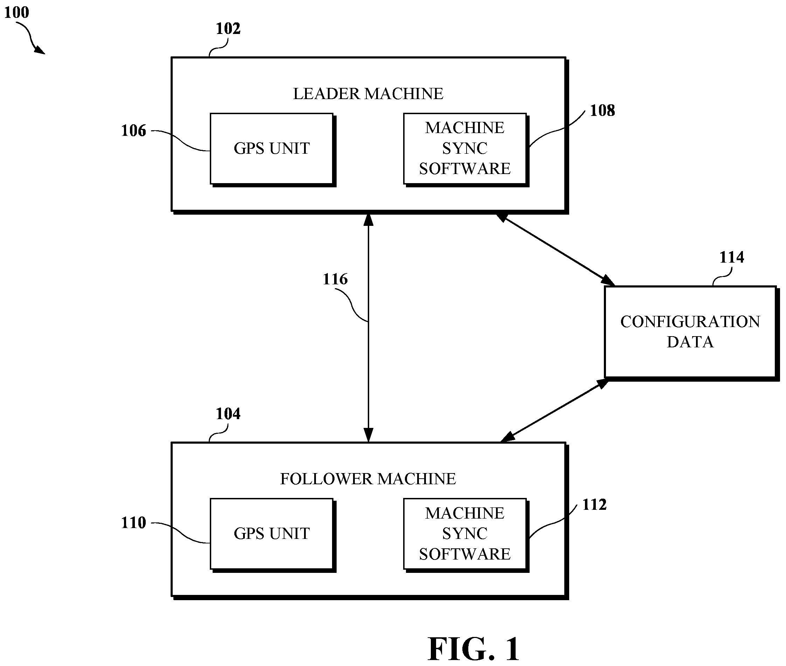

FIG. 1 is a block diagram of a system 100 for setting a homepoint. The system 100 includes a leader machine 102 and a follower machine 104. As the leader machine 102 moves, the follower machine 104 may autonomously follow based on a homepoint set by the system 100. The leader machine 102 can be a combine harvester, a forage harvester, a sugar cane harvester, or any other type of machine that is to be followed by a follower machine. In an example, the follower machine can be a tractor with an attached implement. The implement may be a grain cart, a forage wagon, or multiple carts. The follower machine can be any type of follower machine that is follow a leader machine and maintain the same relative position with respect to the leader machine.

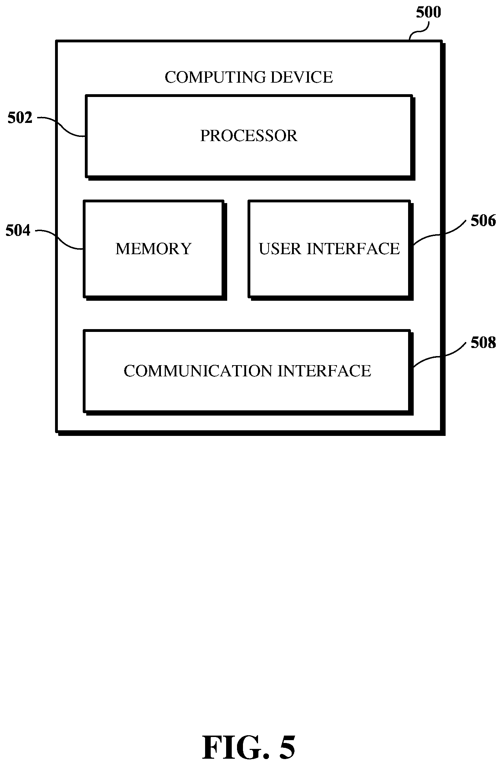

For simplicity, this disclosure uses statements such as "machine X performs an action Y." These statements should be understood to mean that a computing device (e.g., a controller) within machine X performs the action Y or executes instructions to cause machine X to perform the action Y. A software application, which is executable by the computing device and may be included in or work in conjunction with machine X, can also perform action Y or cause machine X to perform action Y. The computing device may be as described with respect to FIG. 5. Additionally, for brevity, this disclosure sometimes uses the term "follower" to refer to the combination of a follower machine (e.g., a tractor) that includes a GPS unit and an implement (e.g., a cart) attached thereto. However, at other times, the follower and the implement are referred to separately and the combination of the follower and implement may be referred to as the follower-implement combination. The intended meaning should be clear from the context.

The leader machine 102 is shown as including a GPS unit 106 and a machine sync software 108. In some implementations, the leader machine 102 may not include the machine sync software 108. The follower machine 104 is shown as including a GPS unit 110 and a machine sync software 112. A GPS unit can be used to determine the precise geographic location of the respective machine by receiving signals from multiple GPS satellites and calculating the machine's position based on the time delay of the received signals. Alternatively, other positioning technologies such as Real-Time Kinematic (RTK) GPS, Radio Frequency Identification (RFID), Bluetooth Low Energy (BLE) beacons, Differential GPS (DGPS), and Long-Range Navigation (Loran) may be used to accomplish the same purpose.

The machine sync software 108 can be used to guide the leader machine 102 that is moving towards the follower machine 104 that may be stationary based on a homepoint; and the machine sync software 112 can be used to guide the follower machine 104 that is moving towards the leader machine 102, which may be stationary. To illustrate, and without limitations, an approaching grain cart tractor can be guided to a predetermined "home" position alongside a combine for unloading. The homepoint is a point in the leader machine 102 fixed coordinate system and can be based on a GPS unit of the leader machine 102. The homepoint can be thought of as a point in space that moves with the fixed coordinate system of the leader machine 102.

Each of the machine sync software 108 and the machine sync software 112 can be or include programs, subprograms, functions, routines, subroutines, operations, executable instructions, and/or the like for, *inter alia* and as further described herein, setting homepoints using equipment models and using the set homepoints to align machines, such as a follower machine to a leader machine. A machine sync software can be executed by a computing device, such as the computing device 500 described with respect to FIG. 5.

Once a homepoint is set for the follower machine 104 based on the leader machine 102 and the follower machine 104 itself (e.g., the follower-implement combination), speed and direction synchronization can begin. The follower machine 104 can autonomously travel towards the homepoint, and the leader machine 102 and the follower machine 104 actively track each other. Stated differently, the homepoint is a fixed position relative to the GPS coordinates of the leader machine 102 and the follower machine 104 (e.g., a controller therein) continuously strives to reach and maintain this fixed homepoint position relative to the GPS of the leader machine 102. The follower machine 104 synchronizes its speed and direction with those of the leader machine 102.

A communication path 116 may be established between the leader machine 102 and the follower machine 104 via which the leader machine 102 may regularly (e.g., at a frequency of 50 Hertz) transmit at least its GPS position to the follower machine 104. The leader machine 102 may also transmit its speed and/or direction to the follower machine 104. The communication path 116 can be established using various technologies, including but not limited to Wireless Fidelity (Wi-Fi) such as a wireless local area network (WLAN), which allows machines to communicate within a certain range and can be effective for short-range communication and can support high data transfer rates; cellular networks (such as utilizing mobile networks (e.g., 4G, 5G)); Bluetooth, which is a short-range wireless technology standard that enables machines to exchange data over short distances; radio frequency, which uses specific radio frequencies for communication; satellite communication, which employs satellite links to transmit data; or Ultrawideband (UWB), which is a wireless communication protocol that uses a wide spectrum of frequencies for short-range, high-bandwidth communications.

That a homepoint is set for the follower machine 104 based on the leader machine 102 includes that the homepoint is set based on a kinematic model (referred to as a "leader kinematic model") of the leader machine 102 and a kinematic model (referred to as a "follower kinematic model") of the follower machine 104. If an implement is attached to the follower machine 104, then the homepoint may be set based on the leader kinematic model, the follower kinematic model, and the implement kinematic model. For brevity, the implement kinematic model may be considered to be part of the follower kinematic model.

A kinematic model is a mathematical representation of the geometric (and/or motion) characteristics of a machine or implement. A kinematic model may include parameters (e.g., measurements) such as the position, orientation, sizes, and other geometric characteristics of at some components of the machine or implement. The leader kinematic model and the follower kinematic model enable precise calculation of the homepoint by considering the physical and operational constraints of both of the leader machine 102 and follower machine 104, ensuring accurate synchronization during operations.

An inverse kinematics process can be used to identify (e.g., calculate or determine) and/or set a homepoint. Inverse kinematics is a process used to calculate the required joint parameters to place a part of a system, such as the end of a robotic arm or the unloading auger of a combine harvester, at a desired position. In the context of agricultural machinery, inverse kinematics can be employed to automatically position, for example, a combine's unloading auger at a specific location relative to, for example, a grain cart attached to a follower tractor. By calculating the necessary angles and extensions of the combine's movable components, precise alignment for efficient and accurate unloading is possible. Mathematical (kinematic) models to determine the joint configurations needed to achieve the desired end position are used.

To illustrate, and without limitation, in the case that the leader machine 102 is a harvesting combine, the leader kinematic model may include, as further described herein, details such as a turret offset, an auger length, a GPS unit location, and unloading position of the leader machine; and the follower kinematic model may include, as further described herein, details such as a drawbar location, grain cart dimensions, a GPS unit location, and receiving position of the follower machine. Which dimensions of a machine or implement are included in a kinematic model usable in setting a homepoint depends on the machine or implement itself.

A kinematic model may be identified using various techniques. In an example, the kinematic model for a machine may be retrieved from a remote configuration database that includes configuration data 114, where each machine's specific parameters are stored. The kinematic model can also be identified based on an identifier, such as a Vehicle Identification Number (VIN), of the machine, which enables the retrieval of pre-stored kinematic parameters associated with that VIN, such as from the remote configuration database. An implement kinematic model may be identified based on a product model number or serial number of implement. The kinematic model associated with a machine or implemented can be stored in any suitable format or data structure. In an example, the kinematic model can be stored as key-value pairs, where the keys a parameter names and the values are the corresponding parameter values. In an example, the configuration data 114 can be implemented as a lookup table that receives a machine or implement identifier and outputs the corresponding kinematic model.

In another example, the machine sync software may provide user interfaces that enable an operator to manually enter parameters of a kinematic model, allowing for customization based on real-time conditions or unique machine configurations. In an example, a machine can be configured to include its own kinematic model, which another machine can obtain directly by transmitting a request for the kinematic model via machine-to-machine communication. Moreover, kinematic models can also be dynamically generated using real-time sensor data from the machine, inertial measurement units (IMUs), and other onboard sensors (e.g., removable sensors).

In an example, removable sensors may be temporarily attached at different defined locations of a machine or implement, allowing the machine sync software to obtain measurements (parameters) for the kinematic model based on the locations of the sensors. These sensors can include accelerometers, gyroscopes, ultrasonic sensors, or other types of positional and motion detection devices. The data collected from these removable sensors can be used to accurately map the geometric and kinematic characteristics of the machine, which is then stored for later retrieval. For example, a sensor attached to the tip of an unloading auger can provide precise positional data that is used to update (or set) the kinematic model of the leader machine 102. Similarly, sensors placed at various points along a grain cart can help determine its dimensions and alignment relative to the tractor. In an example, the machine sync software may identify a list of sensors currently attached to the machine and guide the operator to associate each identified sensor with a specific component, location, or measurement on the machine or implement.

Setting the homepoint can be triggered by various conditions and actions.

Setting the homepoint may be triggered is when the follower machine 104 enters an operational zone of the leader machine 102, as detected by the GPS units or other positional sensors. The "operational zone" of the leader machine 102 can be a designated area (e.g., a geo fence) around the leader machine 102 where the follower machine 104 can effectively synchronize its movements and operations. The operational zone can be defined based on the positional data of the leader machine 102. When the follower machine 104 enters the operational zone, the follower machine 104 can be guided to align itself with the leader machine 102 to perform synchronized operations. For example, in the context of a combine harvester (leader machine) and a tractor with a grain cart (follower machine), the operational zone can be the area to the side of the combine harvester where the tractor and grain cart can position themselves to receive the grain from the combine's unloading auger. The machine sync software 112 can be configured to ensure that once the tractor and grain cart enter this operational zone, they can be guided to the precise homepoint for efficient and accurate unloading.

In another example, the homepoint can be set when the operator of the follower machine 104 invokes a user interface control of the machine sync software 112, signaling that the follower machine 104 is to be aligned with the leader machine 102. In another example, the machine sync software 112 may trigger the setting of the homepoint automatically based on predefined operational criteria, such as the proximity of the follower machine 104 to the leader machine 102 or the detection of specific operational states (e.g., unloading mode).

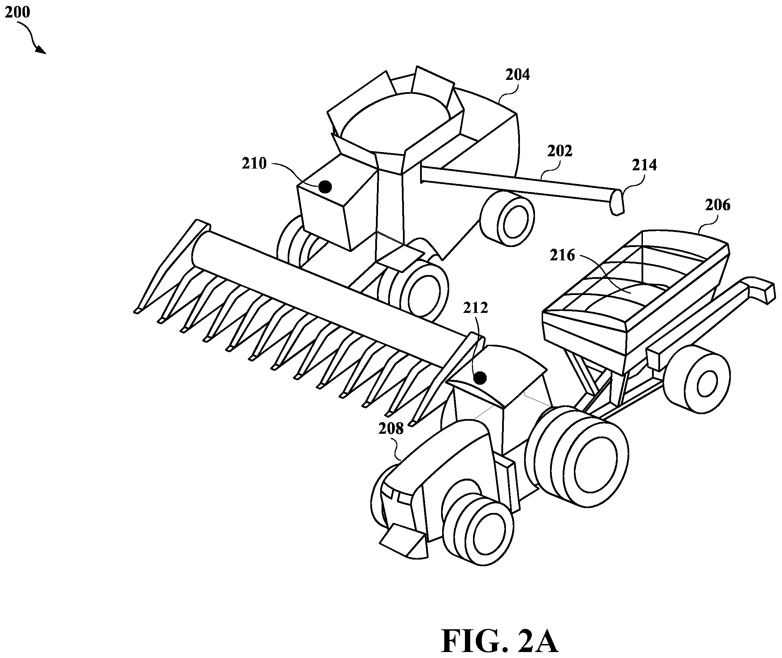

FIG. 2A illustrates an example 200 of using kinematic models to place an auger 202 of a combine 204 into the center of a grain cart 206 attached to a tractor 208. The combine 204 can be the leader machine 102 of FIG. 1 and the combination of the tractor 208 and the grain cart 206 can be the follower machine 104 of FIG. 1. As such, the combine 204 includes a GPS unit 210 and the tractor 208 includes a GPS unit 212. The GPS unit 210 is located at an (X, Y) position within a coordinate system defined with respect to the combine 204, where the origin of the coordinate system is a defined point of the combine 204 (e.g., the center of a drive axle of the combine 204). Similarly, the GPS unit 212 is located at an (X, Y) position within a coordinate system defined with respect to the tractor 208, where the origin of the coordinate system is a defined point of the tractor 208 (e.g., the center of the rear axle of the tractor 208).

Depending on the machine, several dimensions may have to be combined to set the homepoint. As further described herein, several dimensions associated with the combine 204 are combined and several dimensions of the follower-implement combination (e.g., the combination of the tractor 208 and the grain cart 206) are combined to place the auger 202, and more specifically a spout 214 of the auger 202, in the middle (e.g., over a middle point 216) of the grain cart 206. The homepoint is set based on the unloading position (e.g., location) of the combine 204 (e.g., the leader) relative to the position of the GPS unit 210 of the combine 204, and the unloading position of the grain cart 206 relative to the position of the GPS unit 212 of the tractor 208 (e.g., the follower). For example, to find the leader unloading position, the follower is configured with the position of the unloading auger (or spout) relative to the GPS unit 212 in (X, Y) coordinates.

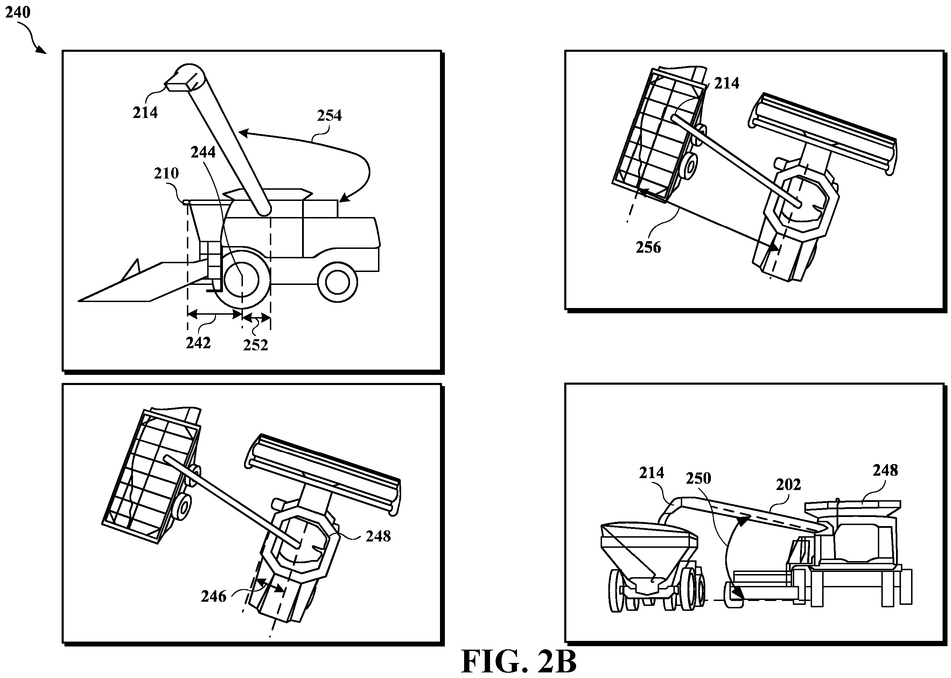

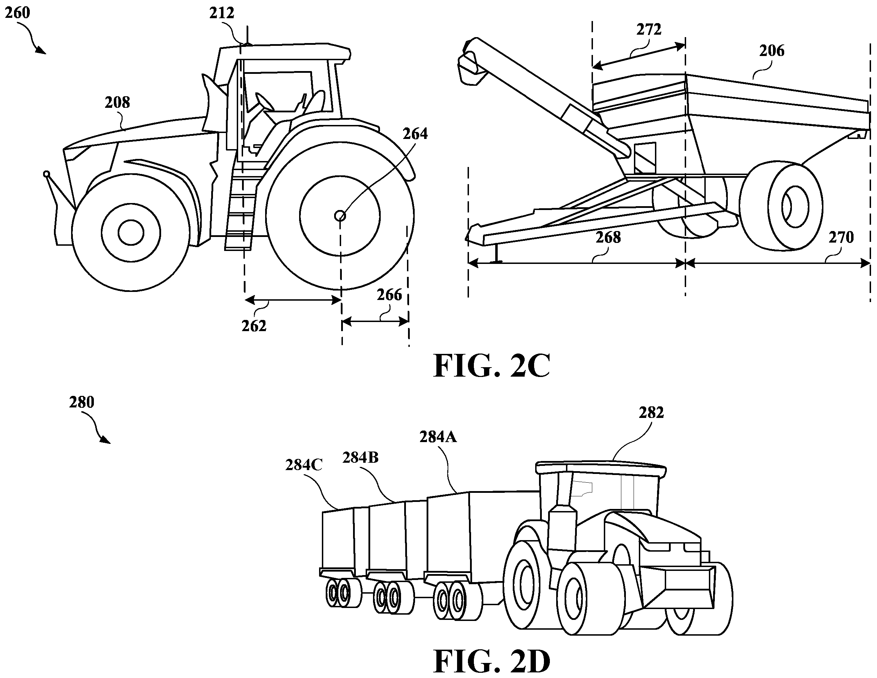

Again, given the combination of the machines shown in FIG. 2, the homepoint is set based on an alignment of the spout 214 over the middle point 216. However, with other types of leader and/or follower machines, different alignments or geometric constraints may need to be met (e.g., set, configured, or determined) to set a homepoint.

FIG. 2B illustrates parameters 240 of a kinematic model of a leader machine (e.g., the combine 204 of FIG. 2A). The parameters 240 are used to identify a location of the spout 214 with respect to the GPS unit 210. A parameter 242 indicates the (X, Y) location of the GPS unit 210 relative to the origin 244 of the combine 204. That is, the parameter 242 indicates the inline position and the lateral position of the GPS unit 210. A parameter 256 indicates the length of the auger 202, which can be the distance from the center of the combine 204 to the tip (e.g., the spout 214) of the auger. A parameter 246 indicates the lateral offset of a turret 248 of the combine 204. A parameter 250 indicates the pitch of the auger 202.

A parameter 252 indicates the inline offset of the auger 202. A parameter 252 indicates the full swing angle of the auger 202, if the auger swings at all. The full swing of the auger can be utilized with respect to machines, such as on combines, that do not include positional sensors capable of indicating the auger's angle. Consequently, it may only be possible to ascertain whether the auger is at 100% or 0% swing based on, for example, a timer from a hydraulic solenoid. Trigonometric functions can be employed to determine the position where the crop is discharged, based on the auger length and the angle (e.g., hypotenuse*cos[full swing angle] = Y offset in leader fixed coordinate, and hypotenuse*sin[full swing angle] = Y offset in leader fixed coordinate, wherein hypotenuse is the auger length). In some configurations that include a position sensor, the landing point of the crop can be calculated based on auger swing in real time (e.g., based on data from the positional sensor).

The kinematic model of the combine 204 may additionally include data (e.g., a flag) indicating whether the auger 202 is folding or not; and data indicating a fold status of the auger 202 (e.g., whether the auger 202 is extended or retracted). A person skilled in the art understands and can derive the transformations necessary, such as based on inverse kinematics, to place the spout 214 of the auger 202 relative to the GPS unit 210 based on the parameters 240.

At least some of these parameters may be associated with the combine 204 and may not be changeable. For example, any parameters related to the turret 248 may be fixed based on an identifier (VIN) of the combine 204. However, the auger may be changeable. As such, a machine sync software associated with one of the combine 204 or the tractor 208 may enable an operator to set parameters associated with the specific auger used. For example, the machine sync software may enable the operator to input or adjust parameters such as the length and angle of extensions or retractions of the auger, which might change based on the specific operational requirements or equipment modifications.

It is noted that the parameter 250 (the auger pitch) is not necessary for setting the homepoint. However, the parameter 250 can be useful for other applications, such as an application that requires the placement of a camera at the spout 214. The parameter 250 can be used to indicate the necessary pitch of the camera. The pitch of the auger can be used to find (e.g., calculate, identify, determine, etc.) the position of the camera relative to a reference coordinate system on the leader machine. Inverse kinematics are then used to determine the orientation of the camera (camera coordinate system) to transform reference frames, allowing the images to be related back to the coordinate system of the combine. The camera (e.g., images obtained thereby) may be used in automatically positioning the auger 202 over the grain cart 206 to ensure efficient unloading of the harvested grain. The camera can be calibrated by marking the positions over the front and back of the grain cart 206, so that the edges and center of the grain cart 206 can be detected. During the unloading process, real-time images from the camera enable the machine sync software to make necessary adjustments to the position (e.g., swing) of the auger 202, ensuring accurate and even distribution of the grain in the grain cart 206. This information can be used to fill the cart evenly by moving the tractor via the machine sync application. Moving the tractor via the machine sync application includes making a real-time adjustment to the homepoint via user interfaces of the machine sync application.

FIG. 2C illustrates parameters 260 of a kinematic model of the follower-implement combination (e.g., the combination of the tractor 208 and the grain cart 206 of FIG. 2A). The parameters 260 are used to identify a location of the middle of the grain cart 206 with respect to the GPS unit 212 of the tractor 208. A parameter 262 indicates the (X, Y) location of the GPS unit 212 relative to the origin 264 of the tractor 208. A parameter 266 indicates a location of a drawbar pin hole, to which the grain cart 206 may be hitched. A parameter 268 indicates a tongue length. A parameter 270 indicates the length of the grain cart 206. A parameter 272 indicates the width of the grain cart 206. Based on these parameter, the location of the center of the grain cart 206 can be determined.

In some implementations or configurations, the width of the cart (e.g., the parameter 272) may not be required. To illustrate, an assumption can be made that the unloading will always target the center of the grain cart 206, and that all drawbars are centrally positioned on the cart, making the centerline of the tractor 208 sufficient for this purpose. However, when these assumptions do not hold true, a more complex kinematic model incorporating the width of the grain cart 206 may be necessary.

At least some of these parameters may be associated with the tractor 208 and may not be changeable. For example, any parameters related to the location of the GPS unit 212 and the drawbar pin hole may be fixed based on an identifier (VIN) of the tractor 208. However, the cart may be changeable. As such, a machine sync software associated with one of the combine 204 or the tractor 208 may enable an operator to set parameters associated with the cart used. For example, the machine sync software may enable the operator to input or adjust parameters such as the length of the grain cart and tongue (if any). In an example, the machine sync software may enable the operator to enter or select an equipment model for one or more carts attached to the tractor 208.

FIG. 2D illustrates an example 280 of attaching multiple implements to a follower machine (e.g., a tractor 282). In the example 280, three grain carts 284A-284C of attached to the tractor 282. However, fewer or more implements may be attached to a follower machine. A respective home point can be associated with each of the implements (e.g., with each of the grain carts 284A-284C).

In an example, for the second grain cart 284B and the third grain cart 284C, the kinematic model extends to include their respective positional offsets and dimensions relative to the preceding cart. Specifically, the kinematic model of the second grain cart 284B includes its drawbar location, cart dimensions, and the offset from the rear of the first grain cart. Similarly, the kinematic model of the third grain cart 284C includes its drawbar location, cart dimensions, and the offset from the rear of the second grain cart.

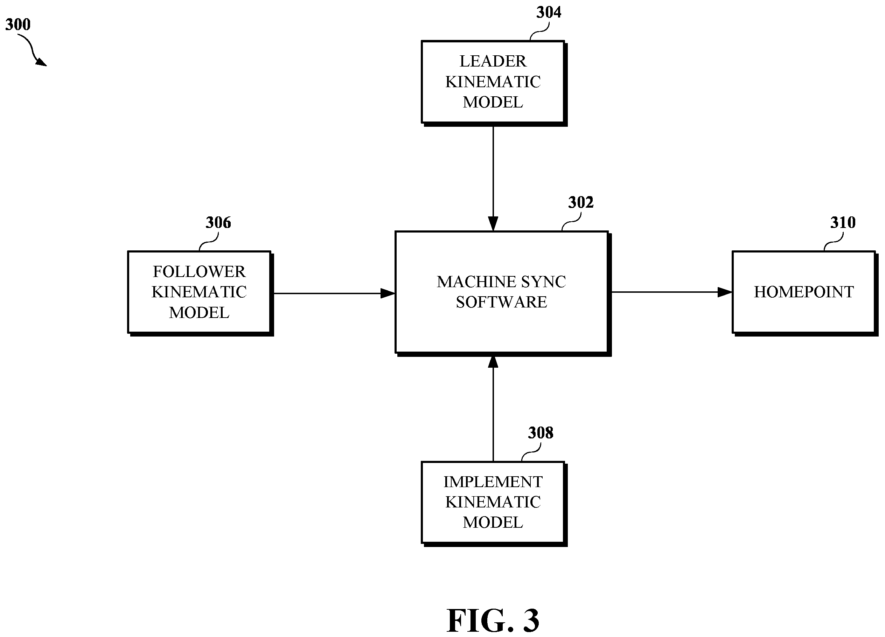

FIG. 3 is a block diagram 300 illustrating setting a homepoint. A machine sync software 302, such as one of the machine sync software 108 or the machine sync software 112 of FIG. 1, uses a leader kinematic model 304 associated with a leader machine, a follower kinematic model 306 associated with a follower machine, and an implement kinematic model 308 associated with an implement attached to the follower machine to set (e.g., determine or calculate) a homepoint 310. In an example, the machine sync software 302 may receive identifiers associated with the leader machine, the follower machine, and the implement to retrieve the corresponding kinematic models.

For example, when a particular cart is connected to a follower, the operator may select, via user interfaces associated with the machine sync software 112, the implement via machine configurator or via work plans sent from an operations center to machine sync software 112. When a connection is established between the leader and follower, the leader/follower information can be automatically shared between the leader and follower machines over a communication path, such as the communication path 116. As such, the parameters (e.g., measurements) of the respective kinematic models can be created and shared to set the homepoint. As already described, a homepoint can be set by summing the positions in X/Y coordinates to appropriately place the initial homepoint.

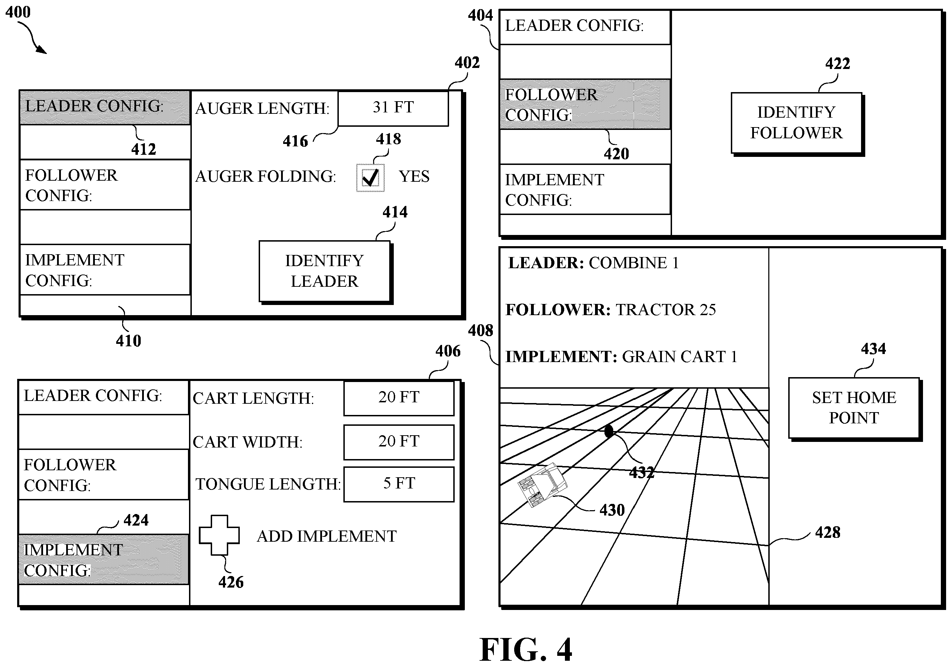

FIG. 4 illustrate user interfaces 402-408 associated with a machine sync software, such as one of the machine sync software 108 or machine sync software 112 of FIG. 1. The user interfaces 402-408 enable an operator, such as of a follower machine or a leader machine, to select and/or configure the leader machine, the follower machine, and/or one or more implements connected to the follower machine. The user interfaces 402-406 include a machine selection area 410 that includes controls selectable by the operator. It is noted that the disclosure herein is not limited to or by the user interfaces 402-408 described herein. For example, more, fewer, or different arrangements or user interface controls are possible. The user interfaces 402-408 are further described from the perspective of an operator of the follower machine. That is, the user interfaces 402-408 are assumed to be presented to an operator of the follower machine via a machine sync software, such as the machine sync software 112 of FIG. 1.

In response to selecting a control 412, the user interface 402 can be displayed by the machine sync software enabling the operator to select and/or configure the leader machine. For example, by selecting control 414, the machine sync software enables the operator to select the leader machine. For example, the machine sync software may enable the operator to select the leader machine from available leader machines. The available leader machines may be associated with a particular farming operations, farmer, or organization. In another example, and as described above, the leader machine may automatically be identified and selected by the machine sync software, such as based on a proximity of the follower machine to the leader machine and/or in response to a connection path, such as the communication path 116 of FIG. 1, being established between the follower and leader machines. The leader kinematic model is then identified (e.g., selected, obtained, retrieved, etc.) in response to the leader machine being identified.

As mentioned above, certain components of the leader machine may be replaceable or exchangeable. For example, the auger of a combine may be changeable. As such, the user interface 402 enables the operator, such as via controls 416-418, to configure additional parameters of the leader kinematic model. While not specifically shown, the user interface 402 may also include (e.g., display) parameters of the identified leader kinematic model. For example, the user interface 402 may additionally display the GPS lateral offset and the GPS inline offset of the GPS unit of the leader machine, and the lateral turret offset, the auger pitch, amongst other parameters of the leader kinematic model.

In response to selecting a control 420, the user interface 404 can be displayed by the machine sync software, enabling the operator to select and/or configure the follower machine. For example, by selecting control 422, the machine sync software enables the operator to identify the follower machine. The machine sync software may enable the operator to select the follower machine from a list of available follower machines. Once the follower machine is identified, the follower kinematic model is then identified (e.g., selected, obtained, retrieved, etc.) accordingly.

The user interface 404 may enable the operator to configure various parameters of the follower kinematic model, such as connection type (e.g., drawbar, rear three-point connection, front three-point connection, wagon hitch, etc.) of an implement. The user interface 404 may display parameters of the identified follower kinematic model. For example, the user interface 404 may display the GPS lateral offset and the GPS inline offset of the GPS unit of the follower machine as well as the connection offset (such as the offset of a drawbar, the offset of a rear three-point connection, an offset of a front three-point connection, an offset of a wagon hitch, as the case may be).

In response to selecting a control 424, the user interface 406 can be displayed by the machine sync software, enabling the operator to configure implements (e.g., zero or more implements) attached to the follower machine. For example, the user interface 406 enables the operator to input or modify various parameters of an implement, such as the cart length, cart width, and tongue length. The user interface 406 includes controls that enable the operator to add additional implements by selecting control 426, which opens additional configuration options for the new implement. To identify an implement, the operator may select from a list of available implements types.

The user interface 406 may display parameters of the identified implement kinematic model, providing fields for the operator to input specific measurements. For instance, the operator can enter the length and width of the grain cart, as well as the length of the tongue connecting the cart to the tractor. The user interface 406 may display additional parameters of an implement kinematic model. When more than one implement is added as an attachment to the follower machine, the user interface 406 enables the operator to provide (e.g., enter) parameters (e.g., dimensions) related to the connection (e.g., rear connection) between the added implement and the implement to which the added implement will be attached.

After the operator configures the leader machine, the follower machine, and the implement(s), the user interface 408 can be displayed by the machine sync software. The user interface 408 includes a virtual map 428, which visually represents a follower machine 430 and a calculated homepoint 432. The purpose of this user interface is to guide the alignment of the follower machine 430 with the homepoint 432.

The virtual map 428 provides a real-time visualization, showing the current position of the follower machine 430 and the location of the homepoint 432 relative to the leader machine. The operator can use this interface to manually drive the follower machine to the homepoint or enable the follower machine to autonomously drive there. The interface may include additional controls and indicators to assist the operator in achieving precise alignment, ensuring efficient and accurate synchronization between the machines. A control 434 may be used by the operator to initiate or confirm the alignment process. By selecting the control 434, the operator can command the follower machine to start moving towards the homepoint, either manually or autonomously.

FIG. 5 is an example of a computing device 500. The computing device 500 is shown as including a processor 502, a memory 504, a user interface 506, and a communication interface 508. The computing device may be implemented by a machine, such as the leader machine 102 and/or the follower machine 104 of FIG. 1. The computing device 500 may facilitate communication between the machine and other computing devices, which may be remote from the machine. The computing device 500 can execute instructions such as those of a machine sync software.

The processor 502 may be a microprocessor, and may include a single processor or multiple processors. A processor may have a single processing core or multiple processing cores. The processor 502 may be or include other types of devices, or multiple devices, not existing or hereafter developed, configured for manipulating or processing information. The computing device 500 may include multiple processors interconnected in one or more manners, including but not limited to, hardwired or networked (e.g., wirelessly networked). By way of example, the operations of the processor 502 may be distributed across multiple devices or units that may be coupled directly or via a local area or other suitable network. The processor 502 may also include a cache or cache memory for local storage of operating data or instructions associated with the evaluation.

The memory 504 may include one or more memory components, which may each be volatile memory or non-volatile memory. For example, the volatile memory of the memory 504 may be random access memory (RAM) (e.g., a DRAM module, such as DDR SDRAM) or another form of volatile memory. In another example, the non-volatile memory of the memory 504 may be a disk drive, a solid-state drive, flash memory, phase-change memory, or another form of non-volatile memory configured for persistent electronic information storage. The memory 504 may also include other types of devices, now existing or hereafter developed, configured for storing data or instructions for processing by the processor 502.

The memory 504 can include data for immediate access by the computing device 500. For example, the memory 504 may include executable instructions, application data, an operating system, or a combination thereof accessible by the processor 502. The executable instructions, the application data, the operating system, or a combination thereof may be loaded or copied, in whole or in part, from non-volatile memory to volatile memory to be executed by the computing device 500. For example, the executable instructions and application data may include instructions and data for machine synchronization; kinematic model calculations, selections, or configurations; and homepoint setting, as described in the present disclosure.

The memory 504 may include executable instructions or application data associated with a communication interface 508. The communication interface 508 may be or may include a transmitter and/or a receiver. The communication interface 508 may facilitate communication between, for example, leader and follower machines. For example, the communication interface 508 may enable data exchange over a communication path allowing for real-time synchronization and data updates between the machines.

The user interface 506 may include one or more input interfaces and/or output interfaces. An input interface may be, for example, a positional input device, such as a mouse, touchpad, touchscreen, or the like; a keyboard; or another suitable human or machine interface device. An output interface may be, for example, a display, such as a liquid crystal display, a cathode-ray tube, a light emitting diode display, or other suitable display. As such, an operator may interact with a machine sync software, select or configure machines and implements, view real-time positional data, and monitor the status of machine synchronization through the user interface 506. Additionally, the user interface 506 may provide visual indicators and alerts to assist the operator in maintaining optimal machine operation and synchronization.

The computing device 500 may include additional components. For example, the computing device 500 may include power management units, various sensors for monitoring environmental conditions and machine status, and interfaces for connecting to external storage devices or other peripherals. These components ensure that the computing device 500 operates reliably in various agricultural environments and can handle the processing and communication demands of the machine sync system.

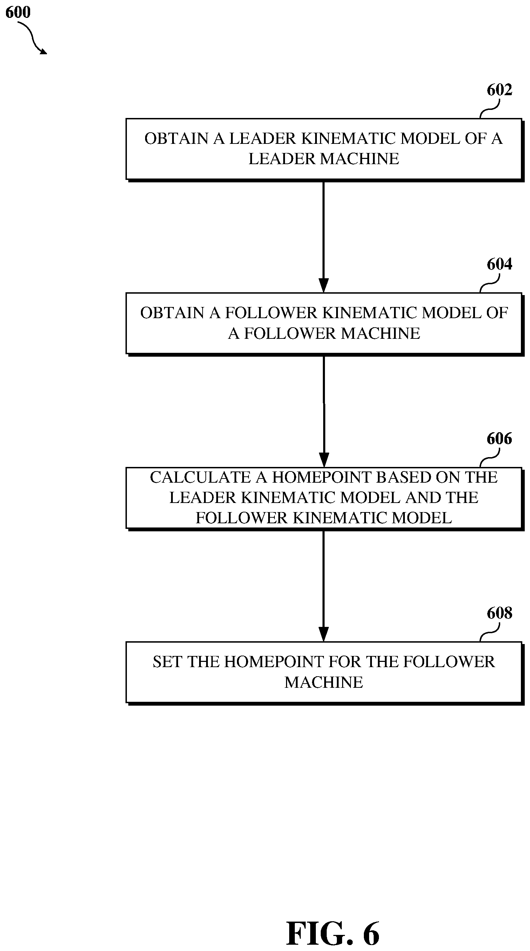

To further describe some implementations in greater detail, reference is next made to examples of techniques which may be performed by or using a system for setting a homepoint based on kinematic models. FIG. 6 is a flowchart of an example of a technique 600 for setting a homepoint. The technique 600 can be executed using computing devices, such as the systems, hardware, and software described with respect to FIGS. 1-5. The technique 600 can be performed, for example, by executing a machine-readable program or other computer-executable instructions, such as routines, instructions, programs, or other code. The steps, or operations, of the technique 600, or another technique, method, process, or algorithm described in connection with the implementations disclosed herein can be implemented directly in hardware, firmware, software executed by hardware, circuitry, or a combination thereof. The technique 600 can be executed by a machine sync software, such as the machine sync software 112 of FIG. 1.

For simplicity of explanation, the technique 600 is depicted and described herein as a respective series of steps or operations. However, the steps or operations of the technique 600 in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 602, a leader kinematic model of a leader machine is obtained. The leader kinematic model may be obtained in any number of ways. For example, the leader kinematic model may be retrieved based on an identifier, such as the VIN of the leader machine. Thus, the technique 600 may retrieve (e.g., access) pre-stored kinematic parameters, such as from a configuration database. In an example, the leader machine can be identified, and its kinematic model obtained based on its proximity to the follower machine, utilizing sensors or communication signals to establish a connection between the machines. In an example, the leader kinematic model may be generated or refined using real-time data from onboard sensors, such as GPS units, cameras, and other positional tracking devices. This data can be processed to determine the specific characteristics of the leader machine, such as, for example, turret offset, auger length, and other relevant parameters. As such, in an example, the leader machine may be a combine and the leader kinematic model may include parameters usable to correlate an auger position to the coordinates of the leader machine. As such, the leader kinematic model can include an auger offset location. With respect to some leader kinematic models, the auger offset location can be determined using a turret offset as an intermediate transformation. As such, the leader kinematic model may include as a turret offset and an auger length.

At 604, a follower kinematic model of a follower machine is obtained. The follower kinematic model can include an implement kinematic model. As such, the follower kinematic model may include parameters such as the drawbar location and cart dimensions. The follower machine may include an autonomous navigation system to adjust its position based on the homepoint.

The follower kinematic model may be obtained in any number of ways. In an example, the follower machine may be identified, such as based on an identifier (e.g., a VIN). Once identified, a pre-stored follower kinematic model can be retrieved, such as from a configuration database. In an example, the follower kinematic model may be generated based on real-time sensor data, including GPS coordinates and positional data from onboard sensors. In an example, the technique 600 may enable an operator to manually input or adjust parameters of the follower kinematic model through one or more user interfaces.

The implement kinematic model may be obtained by identifying a specific implement attached to the follower machine and retrieving its corresponding kinematic parameters from a configuration database. In another example, the implement kinematic model may be dynamically generated using data from sensors attached to the implement, such as length, width, and attachment point measurements.

At 606, a homepoint position is calculated based on the leader kinematic model and the follower kinematic model (which may include an implement kinematic model). As described above, the homepoint enables an alignment of the follower machine to the leader machine. For example, the alignment may align an unloading auger of the leader machine to a relative position of a cart attached to the follower machine. In an example, the relative position can be the center of the cart. However, the relative position can be any other position within the cart suitable for aligning the unloading auger. In an example, the relative position can be selected (e.g., determined, identified, set, etc.) by an operator of the follower machine or the leader machine. Additionally, GPS coordinates associated with the leader machine may be received to assist in this calculation. Various transformations and calculations may be performed to calculate the homepoint, as described herein.

At 608, the homepoint position is set for the follower machine. The technique 600 may further include generating a user interface that displays the calculated homepoint and synchronization status, ensuring that the operator can monitor and verify the alignment process.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.

## Claims

1. A method for automatically setting homepoints in a machine synchronization system, the method comprising:
obtaining a leader kinematic model of a leader machine;
obtaining a follower kinematic model of a follower machine;
calculating a homepoint based on the leader kinematic model and the follower kinematic model, wherein the homepoint enables an alignment of the follower machine to the leader machine; and
setting the homepoint for the follower machine.

2. The method of claim 1, wherein the alignment aligns an unloading auger of the leader machine to a relative position of a cart attached to the follower machine.

3. The method of claim 1, wherein the leader kinematic model is obtained based on an identifier of the leader machine.

4. The method of claim 1, further comprising:
identifying the leader machine based on a proximity of the leader machine to the follower machine.

5. The method of claim 1, further comprising:
receiving global positioning system coordinates associated with the leader machine; and
autonomously operating the follower machine based on the global positioning system coordinates and the homepoint.

6. The method of claim 1,
wherein the leader kinematic model comprises an auger offset location; and
wherein the follower kinematic model comprises a drawbar location and a cart dimension.

7. The method of claim 1, wherein the follower machine includes an autonomous navigation system to adjust its position based on the homepoint.

8. The method of claim 1, further comprising:
generating a user interface that displays the calculated homepoint and synchronization status.

9. A system for automatically setting homepoints in a machine synchronization system, the system comprising:
one or more memories; and
one or more processors, the processors configured to execute instructions stored in the one or more memories to:
obtain a leader kinematic model of a leader machine;
obtain a follower kinematic model of a follower machine;
calculate a homepoint based on the leader kinematic model and the follower kinematic model, wherein the homepoint enables an alignment of the follower machine to the leader machine; and
set the homepoint for the follower machine.

10. The system of claim 9, wherein the alignment aligns an unloading auger of the leader machine to a relative position of a cart attached to the follower machine.

11. The system of claim 9, wherein the one or more processors further configured to execute instructions stored in the one or more memories to:
receive global positioning system coordinates associated with the leader machine; and
autonomously operate the follower machine based on the global positioning system coordinates and the homepoint.

12. The system of claim 9,
wherein the leader kinematic model comprises an auger offset location; and wherein the follower kinematic model comprises a drawbar location and a cart dimension.

13. The system of claim 9, wherein the follower machine includes an autonomous navigation system to adjust its position based on the homepoint.

14. The system of claim 9, wherein the one or more processors further configured to execute instructions stored in the one or more memories to:
generate a user interface that displays the calculated homepoint and synchronization status.

15. One or more non-transitory computer readable media storing instructions operable to cause one or more processors to perform operations for setting homepoints in a machine synchronization system, the operations of any one of the method of claim 1 to 8.

## Amended claims

### Amended claims in accordance with Rule 137(2) EPC.

1. A method for automatically setting a homepoint in a machine synchronization system (100) and controlling movement of a follower machine (104), the method comprising:
obtaining a leader kinematic model (304) of a leader machine (102), the leader kinematic model (306) including parameters (240) usable to correlate the position of a tip of an unloader auger (202) of the leader machine (102) to the coordinates of a GPS unit (210) of the leader machine (102);
obtaining a follower kinematic model (306) of a follower machine (104) comprising a tractor (208) and a grain cart (206) attached to the tractor (208), the follower kinematic model (306) including a drawbar location, grain cart dimensions, location of a GPS unit (212) of the tractor (208) and a grain receiving position of the grain cart (206);
calculating a homepoint (310) based on the leader kinematic model (304) and the follower kinematic model (306), wherein the homepoint (310) aligns the tip of the unloader auger (202) of the leader machine (102) to a relative position of the grain cart (206) for unloading grain from the unloader auger (202) to the grain cart (206);
setting the homepoint (310) for the follower machine (104);
receiving global positioning system coordinates associated with the leader machine (102) and autonomously operating the follower machine (104) based on the received global positioning system coordinates and the set homepoint (310) such that the follower machine (104) autonomously follows based on the set homepoint (310) as the leader machine (102) moves;
**characterized in that** a removable sensor attached to the tip of the unloader auger (202) provides positional data that is used to update or set the leader kinematic model (304) and/or that the follower kinematic model (306) is generated based on real-time sensor data, including GPS coordinates and positional data from onboard sensors.

2. The method of claim 1, further comprising generating a user interface (402-408) that displays the calculated homepoint and synchronization status.
